(19)

Europäisches
Patentamt
European
Patent Office
Office européen
des brevets

(11) **EP 3 202 867 A1**

(12) **EUROPEAN PATENT APPLICATION**
published in accordance with Art. 153(4) EPC

(43) Date of publication:
**09.08.2017 Bulletin 2017/32**

(21) Application number: **15847890.9**

(22) Date of filing: **11.09.2015**

(51) Int Cl.:
*C09D 171/02* (2006.01)     *C09D 123/00* (2006.01)
*C09D 123/08* (2006.01)     *C09D 175/08* (2006.01)

(86) International application number:
**PCT/JP2015/075813**

(87) International publication number:
**WO 2016/052139 (07.04.2016 Gazette 2016/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **29.09.2014 JP 2014198448**

(71) Applicant: **Sumitomo Seika Chemicals Co., Ltd.
Hyogo 675-0145 (JP)**

(72) Inventors:
• **OZAWA, Hitoshi**
  **Osaka-shi**
  **Osaka 541-0041 (JP)**
• **MIYABARA, Ryou**
  **Himeji-shi**
  **Hyogo 672-8076 (JP)**

(74) Representative: **Nicholls, Kathryn Margaret
Mewburn Ellis LLP
City Tower
40 Basinghall Street
London EC2V 5DE (GB)**

(54) **RESIN COMPOSITION FOR FORMING HYDROPHILIC COATING FILM**

(57)     The purpose of the present invention is to provide a resin composition for forming a hydrophilic coating film with which it is possible to form a hydrophilic coating film imparted with exceptional durability and suitable moisture sorption, wettability, and slip properties without selecting the type of substrate. A resin composition formed by dissolving or dispersing a modified polyalkylene oxide and a polyolefin resin in a hydrophilic organic solvent, and a hydrophilic coating film and hydrophilic-surfaced substrate obtained by drying this resin composition on a substrate.

EP 3 202 867 A1

**Description**

TECHNICAL FIELD

The present invention relates to a resin composition for forming a hydrophilic coating film, a hydrophilic coating film obtained from the resin composition, a surface-hydrophilic substrate obtained by drying the resin composition on a substrate, and a production method thereof. More specifically, the present invention relates to a resin composition capable of forming a hydrophilic coating film having excellent durability, imparted with suitable moisture absorption-desorption property, wettability and slipperiness to various substrates.

BACKGROUND ART

Methods of imparting hydrophilicity, slipperiness, water absorption, moisture absorption property or the like, to a resin or rubber by mixing a polyalkylene oxide modified product with the resin or rubber are known (Patent Documents 1 and 2). However, these methods are not effective for metal, leather or the like which does not have thermoplasticity. In addition, a method of forming a hydrophilic coating film having excellent adhesion on its surface is often used, since these properties are preferably exhibited on the surface of the substrate and necessity of modifying the entire substrate is low.

As a method for forming a hydrophilic coating film, there is known a method of using a water-insoluble, acrylic-type or starch-type water-absorbent resin powder (Patent Document 3). However, there are, for example, problems that the coating film obtained by this method has a high water-absorption ability of the water-absorbent resin and water-retention capability and therefore has almost no humidity conditioning ability, and the swell under high humidity is so large that the coating film is peeled off. In order to solve these problems, a coating film using as a binder a water-absorbent resin soluble in an organic solvent has been proposed (Patent Document 4). However, although peeling off of the coating film under high humidity is not shown by this method, the adhesion of the coating film to the substrate is not sufficient and there is a problem in durability.

In addition, in order to effectively attach a water-absorbent resin in a film form to a substrate, a method of mixing the water-absorbent resin with an acrylic emulsion or a fluorine-containing emulsion has also been proposed (Patent Document 5). However, this method has problems in storage stability of the mixture liquid and smoothness of the coating film because of the high water-absorption ability of the water-absorbent resin.

A method of applying an aqueous alcohol of modified polyalkylene oxide to leather to impart slipperiness has also been proposed (Patent Document 6). Although this method is effective for a surface having fine irregularities on its surface like leather, there is a problem that the durability of slipperiness deteriorates when the aqueous alcohol of modified polyalkylene oxide is applied to a smooth surface of metal, resin or the like.

PRIOR ART DOCUMENT

Patent Documents

[Patent Document 1] JP H1-163229 A
[Patent Document 2] JP H6-316623 A
[Patent Document 3] JP S57-27176 A
[Patent Document 4] JP S61-216774 A
[Patent Document 5] JP H6-158032 A
[Patent Document 6] WO 2013/137290

SUMMARY OF THE INVENTION

Problems to be solved

The present invention relates to a resin composition for forming a hydrophilic coating film capable of forming a hydrophilic coating film having excellent durability and imparted with suitable moisture absorption-desorption property, wettability and slipperiness without depending on the type of a substrate. The present invention further relates to a hydrophilic coating film obtained from the resin composition, a surface-hydrophilic substrate obtained by drying the resin composition on a substrate, and a production method thereof.

Means to Solve the Problems

The inventors have actively studied to solve the above problems, and as a result, found that a resin composition comprising a polyalkylene oxide modified product and a polyolefin-based resin which are dissolved or dispersed in a hydrophilic organic solvent can form a hydrophilic coating film having excellent durability, and imparted with suitable moisture absorption-desorption property, wettability and slipperiness to various substrates, thereby the inventors accomplished the present invention.

That is, the present invention encompasses, for example, the subject matter described in the following items.

Item 1.

A resin composition for forming a hydrophilic coating film, wherein the resin composition comprises a polyalkylene oxide modified product and a polyolefin-based resin which are dissolved or dispersed in a hydrophilic organic solvent.

Item 2.

The resin composition for forming a hydrophilic coating film according to item 1, wherein the resin composition comprises 3 to 30 parts by mass of the polyolefin-based resin relative to 100 parts by mass of the polyalkylene oxide modified product.

Item 3.

The resin composition for forming a hydrophilic coating film according to item 1 or 2, wherein the composition comprises in a total concentration of the resins 0.3 to 30% by mass of the polyalkylene oxide modified product and the polyolefin-based resin.

Item 4.

The resin composition for forming a hydrophilic coating film according to any one of items 1 to 3, wherein the hydrophilic organic solvent comprises 5 to 60% by mass of water.

Item 5.

The resin composition for forming a hydrophilic coating film according to any one of items 1 to 4, wherein the polyalkylene oxide modified product is obtained by reacting a polyalkylene oxide compound, a diol compound and a diisocyanate compound.

Item 6.

The resin composition for forming a hydrophilic coating film according to any one of items 1 to 5, wherein the polyolefin-based resin is a copolymer obtained by reacting an ethylene compound and an $\alpha,\beta$-unsaturated carboxylic acid.

Item 7.

A hydrophilic coating film obtained by drying the resin composition for forming a hydrophilic coating film according to any one of items 1 to 6.

Item 8.

A surface-hydrophilic substrate obtained by drying the resin composition for forming a hydrophilic coating film according to any one of items 1 to 6 on a substrate.

Item 9.

A method for producing a surface-hydrophilic substrate by drying the resin composition for forming a hydrophilic coating film according to any one of items 1 to 6 on a substrate.

Effect of the Invention

The present invention provides a resin composition for forming a hydrophilic coating film capable of forming a hydrophilic coating film having excellent durability, and imparted with suitable moisture absorption-desorption property, wettability and slipperiness on various substrates. Furthermore, the present invention provides a hydrophilic coating film obtained from the resin composition, a surface-hydrophilic substrate obtained by drying the resin composition on a substrate, and a production method thereof.

MODES FOR CARRYING OUT THE INVENTION

The present invention relates to a resin composition for forming a hydrophilic coating film comprising a polyalkylene oxide modified product and a polyolefin-based resin which are dissolved or dispersed in a hydrophilic organic solvent, a hydrophilic coating film obtained from the resin composition, a surface-hydrophilic substrate obtained by drying the resin composition on a substrate, and a production method thereof.

The polyalkylene oxide modified product is preferably a compound obtained by reacting a polyalkylene oxide compound, a diol compound, and a diisocyanate compound.

The polyalkylene oxide modified product is preferably water-absorbent (that is, preferably has water-absorption ability). When the polyalkylene oxide modified product is a water-absorbent polyalkylene oxide modified product, the water-absorption ability is preferably 10 to 40 g/g, more preferably 15 to 35 g/g. When the water-absorbent polyalkylene oxide modified product has a water-absorption ability of 10 g/g or more, a preferable smooth feeling after coating and drying (of the hydrophilic coating film) can be obtained. Further, when the water-absorbent polyalkylene oxide modified product has a water-absorption ability of 40 g/g or less, the durability of the obtained hydrophilic coating film is further improved. In the present specification, 1 g of the polyalkylene oxide modified product is weighed (A [g]) and is then immersed in 100 mL of ion exchanged water at room temperature (22°C) for 24 hours to gel, then the mass of the gel of a trapped material (residue) after filtering the gel with a 200 mesh (pore size: 75 $\mu$m) wire mesh is measured (B [g]), and thereby the "water-absorbent ability" is a value calculated according to the following equation (since A is 1, the value is B).

$$\texttt{Water absorbent ability (g/g) = B / A = B / 1 = B}$$

The water-extractable content of the polyalkylene oxide modified product is preferably from 10 to 40% by mass, and more preferably from 15 to 35% by mass. When the water-extractable content of the polyalkylene oxide modified product is 10% by mass or more, the smoothness of the obtained hydrophilic coating film can be improved. When the water-extractable content of the polyalkylene oxide modified product is 40% by mass or less, the durability of the hydrophilic coating film can be further improved. In the present specification, the gel after the water-absorption ability is measured as described above, is dried in a hot air dryer at 50°C for 8 hours, then the mass is weighed (C [g]), and thereby the "water-extractable content" is a value calculated according to the following equation.

$$\texttt{Water-extractable content (\% by mass)}$$
$$\texttt{= \{(A - C) / A\} × 100 = 100 (1 - C)}$$

The polyalkylene oxide modified product can be obtained by reacting a polyalkylene oxide compound, a diol compound and a diisocyanate compound. The polyalkylene oxide compound is preferably a polyalkylene oxide compound comprising 90% by mass or more of ethylene oxide groups, and more preferably a polyalkylene oxide compound comprising 95% by mass or more of ethylene oxide groups. The ethylene oxide groups are preferably 90% by mass or more, since the initial lubricity of the obtained hydrophilic coating film is particularly high.

Further, the polyalkylene oxide compound is preferably a polyalkylene oxide compound having a number-average molecular weight of 5000 to 50000, and more preferably a polyalkylene oxide compound having a number-average molecular weight of 10000 to 30000. The polyalkylene oxide compound having a number-average molecular weight of 5000 or more is preferably used, since the durability of the obtained hydrophilic coating film is particularly good. The polyalkylene oxide compound having a number-average molecular weight of 50000 or less is preferably used, since the solubility of the polyalkylene oxide modified product is particularly good and the solution viscosity thereof does not become high when producing the composition according to the present invention, so that, for example, the solution can be particularly suitably applied to the substrate surface.

Examples of the diol compound include ethylene glycol, diethylene glycol, triethylene glycol, tetraethylene glycol, propylene glycol, dipropylene glycol, trimethylene glycol, 1,3-butanediol, 2,3-butanediol, 1,4-butanediol, 1,5-pentanediol, 1,6-hexanediol and 1,9-nonanediol. Among these diol compounds, from the viewpoint of the dispersibility of the resulting polyalkylene oxide modified product in a solvent and the adhesiveness of the layer of the polyalkylene oxide modified product to a substrate when producing the hydrophilic coating film or the surface-hydrophilic substrate according to the present invention, ethylene glycol and 1,4-butanediol are preferably used. These diol compounds may be used alone or in combination of at least two.

The use ratio of the diol compound is preferably 1 to 2.5 mol, more preferably 1.2 to 2.0 mol, relative to 1 mol of the polyalkylene oxide compound. The use ratio of the diol compound is preferably 1 mol or more, since the lubricity can be maintained particularly favorably when the obtained hydrophilic coating film or surface-hydrophilic substrate is repeatedly used. In addition, the use ratio of the diol compound is preferably 2.5 mol or less, since solubility of the resulting polyalkylene oxide modified product in the hydrophilic organic solvent is particularly good. The molar number of the polyalkylene oxide compound can be caluculated by dividing the mass of the polyalkylene oxide compound by the number average molecular weight.

The diisocyanate compound is not particularly limited as long as the diisocyanate compound is a compound having two isocyanate groups (-NCO) in the same molecule. Examples thereof include 4,4'-diphenylmethane diisocyanate (MDI), 1,6-hexamethylene diisocyanate (HDI), dicyclohexylmethane-4,4'-diisocyanate (HMDI), 3-isocyanatomethyl-3,5,5-trimethylcyclohexyl isocyanate (IPDI), 1,8-dimethylbenzol-2,4-diisocyanate, and 2,4-tolylene diisocyanate (TDI). Among these diisocyanate compounds, dicyclohexylmethane-4,4'-diisocyanate (HMDI) and 1,6-hexamethylene diisocyanate (HDI) are preferably used from the viewpoint of good lubricity maintenance when the coating film according to the present invention is repeatedly used. These diisocyanate compounds may be used alone or in combination of at least two. The use ratio of each of the polyalkylene oxide compound, the diol compound and the diisocyanate compound is determined such that the ratio of the molar number of the isocyanate group of the diisocyanate compound relative to the total molar number of the terminal hydroxyl group of the polyalkylene oxide compound and the hydroxyl group of the diol compound [R value = (-NCO group /-OH group)] is preferably in the range of 0.6 to 1.5, more preferably 0.8 to 1.1. The R value is preferably 0.6 or more, since the obtained polyalkylene oxide modified product is hardly water-soluble, and when the obtained hydrophilic coating film or surface-hydrophilic substrate is repeatedly used, the lubricity can be particularly favorably maintained. The R value is preferably 1.5 or less, since the dispersibility in the solvent of the obtained polyalkylene oxide modified product is particularly good when producing the hydrophilic coating film or the surface-hydrophilic substrate according to the present invention. The molar number of the polyalkylene oxide compound can be caluculated by dividing the mass of the polyalkylene oxide compound by the number-average molecular weight.

Examples of the method of reacting the polyalkylene oxide compound, the diol compound and the diisocyanate compound include a method of dissolving or dispersing the compounds in a reaction solvent such as toluene, xylene, and dimethylformamide to react the compounds; a method of uniformly mixing each raw material in a powdery or solid state, and heating the mixture to a predetermined temperature to be reacted. From the viewpoint of industrial practice, preferable is a method of continuously supplying each raw material in a molten state, mixing and reacting them in a multi-screw extruder. The temperature of the reaction is preferably 70 to 210°C. Further, a small amount of triethylamine, triethanolamine, dibutyltin diacetate, dibutyltin dilaurate, dioctyltin dilaurate, stannous octoate, triethylenediamine or the like, may also be added to the reaction system from the viewpoint of promoting the reaction in the production of the polyalkylene oxide modified product.

Thus, a polyalkylene oxide modified product may be obtained by reacting the polyalkylene oxide compound, the diol compound and the diisocyanate compound.

The polyalkylene oxide modified product obtained by such a method is usually in the form of pellets, sheets, films, or the like. In the present invention, the dissolution time may be shortened by crushing these polyalkylene oxide modified products by a crusher to be in a range of 30 to 150 $\mu$m. The crushing method is not particularly limited, but may include freezing and crushing with liquid nitrogen to prevent fusion adherence due to shear heat generation during crushing.

The polyolefin-based resin used in the present invention is preferably a copolymer (ethylene/$\alpha,\beta$-unsaturated carboxylic acid copolymer resin) obtained by reacting an olefin compound and an $\alpha,\beta$-unsaturated carboxylic, particularly, an aqueous dispersion liquid of the copolymer. The copolymer is preferably one having the content of an $\alpha,\beta$-unsaturated carboxylic acid of 16 to 24% by mass, and more preferably one having the content of $\alpha,\beta$-unsaturated carboxylic acid of 18 to 23% by mass. The content of the $\alpha,\beta$-unsaturated carboxylic acid is preferably 16% by mass or more, since the dispersibility of the polyolefin-based resin in the aqueous dispersion medium is particularly good owing to the polarity derived from the $\alpha,\beta$-unsaturated carboxylic acid and since an excellent aqueous dispersion liquid can be suitably obtained. The content of $\alpha,\beta$-unsaturated carboxylic acid is preferably 24% by mass or less, since particularly good lubricity can be maintained when the obtained hydrophilic coating film or surface-hydrophilic substrate is repeatedly used. Further, the weight average molecular weight of the polyolefin-based resin in the present invention is preferably from 20000 to 80000, more preferably from 30000 to 70000. The weight average molecular weight of the polyolefin-based resin is preferably within the above range, from the viewpoint of easy production of the aqueous dispersion and good film forming property. In the present invention, the weight average molecular weight can be measured by gel permeation chromatography and calculated in terms of polystyrene.

The olefin compound is not particularly limited, and examples thereof include ethylene, propylene, isobutene, 1-butene, 2-butene, 1-pentene, cis-2-pentene, trans-2-pentene, 1-hexene, 1-heptene, 1-octene, 1-nonene, and 1-decene. Among these olefin compounds, ethylene is preferably used from the viewpoint of the durability of the obtained hydrophilic coating film or surface-hydrophilic substrate.

The $\alpha,\beta$-unsaturated carboxylic acid is not particularly limited, and examples thereof include acrylic acid, methacrylic acid, crotonic acid, 3-ethylacrylic acid, 2-ethylacrylic acid, 3-propylacrylic acid, 2-propylacrylic acid, 3 butylacrylic acid, 2-butyl acrylic acid, 3-pentyl acrylic acid, 2-pentyl acrylic acid, 3-hexylacrylic acid, 2-hexylacrylic acid, 3-heptyl acrylic acid, 2-heptylacrylic acid, 3- octylacrylic acid, 2-octylacrylic acid, 3-nonylacrylic acid, 2-nonylacrylic acid, 3-decylacrylic acid, and 2-decylacrylic acid. Among these $\alpha,\beta$-unsaturated carboxylic acids, acrylic acid is preferably used from the viewpoint of dispersibility in an aqueous dispersion liquid.

A method of producing the aqueous dispersion liquid of the above mentioned ethylene/$\alpha,\beta$-unsaturated carboxylic acid copolymer resin includes a method comprising the ethylene/$\alpha,\beta$-unsaturated carboxylic acid copolymer resin dispersing in the aqueous dispersion medium at 100 to 200°C, preferably at 110 to 170°C with stirring in the presence of a base then cooling to room temperature with stirring continuously.

The stirring temperature is preferably 100°C or more, since the stability of the obtained aqueous dispersion liquid of ethylene/a,$\alpha,\beta$-unsaturated carboxylic acid copolymer resin and the film formability are particularly good, and a preferable film can be obtained suitably. In addition, the stirring temperature is preferably 200°C or lower, since the viscosity of the obtained aqueous dispersion of ethylene/$\alpha,\beta$-unsaturated carboxylic acid copolymer resin is not high.

In the above production method, the ethylene/$\alpha,\beta$-unsaturated carboxylic acid copolymer resin is dispersed in the aqueous dispersion medium in the presence of the base so that the neutralized carboxyl group in ethylene/$\alpha,\beta$-unsaturated carboxylic acid copolymer resin can play the role of an emulsifier and the aqueous dispersion liquid of ethylene/$\alpha,\beta$-unsaturated carboxylic acid copolymer resin can be easily produced.

As the base, ammonia, an organic amine or an alkali metal hydroxide is preferably used.

Examples of the organic amine include methylamine, ethylamine, diethylamine, dimethylethanolamine, and diethanolamine, triethanolamine. Examples of the alkali metal hydroxide include sodium hydroxide, potassium hydroxide and lithium hydroxide. These bases may be used alone or in combination of at least two.

Desirably, the degree of neutralization with a base is 35 to 100 mol%, preferably 40 to 70 mol% of the carboxyl groups of the ethylene/$\alpha,\beta$-unsaturated carboxylic acid copolymer resin. When the degree of neutralization with a base is 35 mol% or more, the dispersibility of the ethylene/$\alpha,\beta$-unsaturated carboxylic acid copolymer resin in the aqueous dispersion medium is particularly good and the aqueous dispersion liquid of ethylene/$\alpha,\beta$-unsaturated carboxylic acid copolymer resin can be suitably obtained.

A method of producing the resin composition for forming a hydrophilic coating film of the present invention is not particularly limited, and the examples thereof include a method comprising adding the polyalkylene oxide modified product and the polyolefin-based resin directly to a hydrophilic organic solvent to be dissolved or dispersed, a method comprising mixing a solution of the polyalkylene oxide modified product in a hydrophilic organic solvent with the aqueous dispersion liquid of the polyolefin-based resin. From the viewpoint of solubility and dispersibility in the mixed solution, suitably used is the method comprising mixing a solution of the polyalkylene oxide modified product in a hydrophilic organic solvent with the aqueous dispersion liquid of the polyolefin-based resin. As a method for mixing, a known method may be adopted and there is no particular limitation. For example, a propeller mixer, a high speed mixer, and a homogenizer are suitably used.

The solution of the polyalkylene oxide modified product in the hydrophilic organic solvent can be obtained, for example, by heating and stirring the polyalkylene oxide modified product in the hydrophilic organic solvent. Examples of the hydrophilic organic solvent include methanol, ethanol, propanol, butanol, acetone, dimethylformamide, dioxane, tetrahydrofuran, ethylene glycol, propylene glycol and butylene glycol. In the present invention, from the viewpoint of the stability of the resin composition and the dispersibility of the polyolefin-based resin, the hydrophilic organic solvent preferably comprises water in the amount of from 5 to 60% by mass, more preferably from 10 to 40% by mass. The content of water is preferably 5% by mass or more, since the stability of the resin composition is particularly good. The content of water is preferably 60% by mass or less, since the viscosity is not high and thereby the mixing property with the aqueous dispersion liquid of the polyolefin-based resin is particularly good.

The resin composition for forming a hydrophilic coating film according to the present invention comprises, in a total concentration of the resins, preferably 0.3 to 30% by mass, more preferably 0.5 to 20% by mass of the polyalkylene oxide modified product and the polyolefin-based resin based on the composition. The concentration is preferably 0.3% by mass or more, since the hydrophilicity of the obtained hydrophilic coating film or the surface-hydrophilic substrate is particularly high. The concentration is preferably 30% by mass or less, since the viscosity of the composition is not too high and the coating is easily performed, and since the stability of the resin composition is particularly good.

The mixing ratio of the polyalkylene oxide modified product and the polyolefin-based resin is so that the amount of the polyolefin-based resin is preferably 3 to 30 parts by mass and more preferably 5 to 25 parts by mass relative to 100 parts by mass of the polyalkylene oxide modified product. The amount of the polyolefin-based resin is preferably 3 parts by mass or more, since the durability of the hydrophilic coating film is particularly high. The amount is preferably 30 parts by mass or less, since the hydrophilicity of the hydrophilic coating film is particularly high.

In addition to the above-mentioned components, the resin composition for forming a hydrophilic coating film according to the present invention may comprise a lubricant such as polyethylene oxide, a defoaming agent, a viscosity modifier, a fungicide and a germicide within the range of not hindering the object of the present invention. If necessary, for example, an antioxidant, a surfactant, an alcohol and the like may be blended. Especially, the initial hydrophilicity is further improved by the addition of the surfactant.

Since the hydrophilic coating film obtained from the resin composition for forming a hydrophilic coating film according to the present invention is excellent in hydrophilicity, the coating film can be used as a coating agent and an adhesive for a steel plate, an aluminum plate and the like, and can be used as a surface modifying agent for hydrophilizing a substrate such as a plastic film and a molded body of a polypropylene, a polyethylene, a polyester, paper, leather, glass, aluminum foil, and aluminum plate. Therefore, according to the present invention, the hydrophilic coating film and the surface-hydrophilic substrate can be suitably produced.

In the present invention, the coating method onto the substrate is not particularly limited, and may be conventional methods such as brush coating, spraying or roll. After coating, a transparent and durable hydrophilic coating film can be obtained by air drying or heat drying. These hydrophilic coating films can be used as, for example, a wet shaving device represented by a razor, a medical device such as a catheter, a modifier for cloth/nonwoven fabric, a sheet for cosmetics, a mirror/glass antifog agent, a ship bottom paint, aluminum fins of an heat exchanger for air conditioning, and surface modification of artificial hair. For example, when coating the composition according to the present invention onto a substrate such as a fabric or a nonwoven fabric, a hydrophilic gradient can be formed in a thickness direction of the substrate from the uncoated surface toward the coated surface by coating the composition onto only one side of the substrate. With this hydrophilicity gradient, the liquid can be quickly transferred to the hydrophilic surface side, and low moisture content can be maintained on the hydrophobic surface side when the liquid contacts with the hydrophobic surface side of the substrate.

Examples

Hereinafter, the present invention will be described in further detail with reference to Examples and Comparative Examples, but the present invention is not limited to these in any way.

Production Example 1: Production of Polyalkylene Oxide Modified Product

100 parts by mass of a fully dehydrated polyethylene oxide having a number-average molecular weight of 20000, 0.90 parts by mass of 1,4-butanediol and 0.1 parts by mass of dioctyltin dilaurate were charged at these ratios into a storage tank A equipped with a stirrer and held at 80°C, and were stirred under a nitrogen gas atmosphere to obtain a uniform mixture. Separately, dicyclohexylmethane-4,4'-diisocyanate was charged into a storage tank B held at 30°C, and was stored under a nitrogen gas atmosphere.

The mixture in the storage tank A at a rate of 500 g/min, and dicyclohexylmethane-4,4'-diisocyanate in the storage tank B at a rate of 19.4 g/min were continuously supplied into a twin-screw extruder set at 110 to 140°C (R value = 1.00) by means of a metering pump, and were mixed in the extruder to perform a reaction. A strand was then discharged through an exit of the extruder, and was pelletized by means of a pelletizer to obtain a polyethylene oxide modified product.

The obtained polyethylene oxide modified product had a water-absorption ability of 25 g/g, and a water-extractable content of 19% by mass.

Production Example 2: Production of Polyalkylene Oxide Modified Product

An ethylene oxide/propylene oxide (mass ratio: 90/10) copolymer having a number-average molecular weight of 15000 at a rate of 250 g/min, and ethylene glycol heated to 40°C at a rate of 2.1 g/min were supplied into a single-screw extruder having a diameter of 40 mm (L/D = 40, preset temperature: 90°C), and were melt-mixed.

The mixture obtained from a discharge opening (the mixture was discharged in a uniform and molten state, and was confirmed by an LC analysis that the mixture was mixed at the charge ratio) was continuously supplied to a hopper port (preset temperature: 80°C) of a twin-screw extruder having a diameter of 30 mm (L/D = 41.5). Simultaneously, dioctyltin dilaurate at a rate of 0.5 g/min was supplied to the hopper port of the twin-screw extruder.

Separately, dicyclohexylmethane-4,4'-diisocyanate adjusted to 30°C at a rate of 12.4 g/min (R value = 0.95) was supplied to a screw barrel section situated on the downstream side of the hopper port of the twin-screw extruder, and was thereby continuously reacted under a nitrogen gas atmosphere (preset temperature: 180°C). A strand obtained from the exit of the twin-screw extruder was cooled, and was then pelletized by means of a pelletizer to obtain a poly ethylene oxide/propylene oxide modified product.

The obtained poly ethylene oxide/propylene oxide modified product had a water-absorption ability of 20 g/g, and a water-extractable content of 15 % by mass.

Production Example 3 : Production of Aqueous Dispersion Liquid of Polyolefin-Based Resin

112 g of an ethylene/acrylic acid copolymer resin (weight-average molecular weight of 58000, acrylic acid content of 20% by mass), 11.3 g of 28 % by mass of ammonia water (corresponding to 60 % neutralization) and 345.5 g of water as an aqueous dispersion medium were charged and heated to raise the temperature under stirring. After the content was heated to 120°C and was then continued to be stirred at that temperature for 4 hours, the content was cooled to room temperature with continuing to be stirred to obtain an aqueous dispersion liquid of the ethylene/acrylic acid copolymer resin (25% by mass concentration).

Example 1

The polyethylene oxide modified product obtained in Production Example 1 was added to an ethanol solution containing 10% by mass of water so as to be 17.6% by mass of the polyethylene oxide modified product, and was heated for dissolution at 70°C to prepare an ethanol solution of polyethylene oxide modified product (PE) .

100 parts by mass of an aqueous dispersion of the ethylene/acrylic acid copolymer resin of Production Example 3 was added to 1775 parts by mass of the PE ethanol solution, and was stirred at room temperature to obtain a resin composition for forming a hydrophilic coating film (8 parts by mass of the polyolefin-based resin relative to 100 parts by mass of the polyalkylene oxide modified product, resin concentration: 18% by mass). This resin composition was applied at a thickness of 100 microns to high impact polystyrene (HIPS) molded by hot pressing to 10 cm $\times$ 10 cm $\times$ 0.1 cm and dried for 1 hour in a hot air dryer at 40°C to obtain a surface-hydrophilic substrate.

Example 2

The poly ethylene oxide/propylene oxide modified product obtained in Production Example 2 was added to an ethylene glycol solution containing 15% by mass of water so as to be 11.1% by mass, and was heated at 70°C to dissolve to prepare an ethylene glycol solution of a polyethylene oxide / propylene oxide modified product (PEP) as.

100 parts by mass of the aqueous dispersion liquid of the ethylene / acrylic acid copolymer resin Production Example 3 was added to 1497 parts by mass of this ethylene glycol solution of PEP, and stirred at room temperature to obtain a resin composition for forming a hydrophilic coating film (15 parts by mass of the polyolefin-based resin relative to 100 parts by mass of the polyalkylene oxide modified product, resin concentration: 12% by mass). This resin composition was applied at a thickness of 150 microns to an aluminum plate cut into 10 cm $\times$ 10 cm $\times$ 0.1 cm and dried for 1 hour in a hot air dryer at 40°C to obtain a surface-hydrophilic substrate.

Example 3

The polyethylene oxide modified product obtained in Production Example 1 was added to an ethylene glycol solution containing 20% by mass of water so as to be 0.81% by mass, and was heated at 70°C to dissolve to prepare an ethylene glycol solution of the polyethylene oxide modified product (PA).

100 parts by mass of the aqueous dispersion liquid of the ethylene / acrylic acid copolymer resin of Production Example 3 was added to 12400 parts by mass of this PA ethylene glycol solution, and was stirred at room temperature to obtain a resin composition for forming a hydrophilic coating film (25 parts by mass of the polyolefin-based resin relative to 100 parts by mass of the alkylene oxide modified product, resin concentration: 1% by mass). This resin composition was applied at a thickness of 150 microns to artificial leather (Supplale manufactured by Idemitsu Technofine) and dried for 1 hour in a hot air dryer at 40°C to obtain a surface-hydrophilic substrate.

Comparative Example 1

The polyethylene oxide modified product obtained in Production Example 1 was added to an ethanol solution containing 10% by mass of water so as to be 17.6% by mass, and was heated at 70°C to dissolve to prepare an ethanol solution of the polyethylene oxide modified product (PA).

This PA ethanol solution was applied at a thickness of 100 microns to impact-resistant polystyrene (HIPS) molded by hot pressing to 10 cm $\times$ 10 cm $\times$ 0.1 cm and dried for 1 hour in a hot air dryer at 40°C to obtain a surface-hydrophilic substrate..

Comparative Example 2

The polyethylene oxide / propylene oxide modified product obtained in Production Example 2 was added to an ethylene glycol solution containing 15% by mass of water so as to be 11.1% by mass and was heated at 70°C to dissolve to prepare an ethylene glycol solution of the polyethylene oxide / propylene oxide modified product (PEP).
This PEP ethylene glycol solution was applied at a thickness of 150 microns to an aluminum plate cut into 10 cm × 10 cm × 0.1 cm and dried for 1 hour in a hot air dryer at 40°C to obtain a surface-hydrophilic substrate.

Comparative Example 3

The aqueous dispersion liquid of ethylene / acrylic acid copolymer resin obtained in Production Example 3 was applied to artificial leather (Supplale manufactured by Idemitsu Technofine) at a thickness of 100 microns and dried for 1 hour in a hot air dryer at 40°C to obtain a surface-hydrophilic substrate.
The compositions and the substrates of Examples 1 to 3 and Comparative Examples 1 to 3 are summarized in Table 1.

[Table 1]

| | Hydrophilic Organic Solution of Polyalkylene Oxide Modified Product (PA) | | | | Aqueous Dispersion Liquid of Polyolefin-Based Resin (PO) | | PA+PO | Substrate |
| | Type | Concentration [% by mass] | Solution | Water Ratio [% by mass] | Type | PO Ratio (Based on 100 parts by mass of PA) | Concentration [% by mass] | |
|---|---|---|---|---|---|---|---|---|
| Ex. 1 | Production Ex. 1 | 17.6 | Ethanol Solution | 10 | Production Ex. 3 | 8 | 18 | HIPS |
| Ex. 2 | Production Ex. 2 | 11.1 | Ethylene Glycol Solution | 15 | Production Ex. 3 | 15 | 12 | Aluminum Plate |
| Ex. 3 | Production Ex. 1 | 0.81 | Ethylene Glycol Solution | 20 | Production Ex.3 | 25 | 1 | Artificial Leather |
| Com. Ex. 1 | Production Ex. 1 | 17.6 | Ethanol Solution | 10 | - | - | - | HIPS |
| Com. Ex. 2 | Production Ex. 2 | 11.1 | Ethylene Glycol Solution | 15 | - | - | - | Aluminum Plate |
| Com. Ex. 3 | - | - | - | - | Production Ex. 3 | - | 25 | Artificial Leather |

EP 3 202 867 A1

The surface-hydrophilic substrates obtained in the above Examples and Comparative Examples were evaluated as follows. The results are summarized in Table 2.

(Evaluation Method)

(1) Contact Angle

After standing for 1 minute from dropping water droplets of a diameter of 2 mm onto the surface of the coating film of the surface-hydrophilic substrates obtained in the above Examples and Comparative Examples, the contact angles were measured with a contact angle meter (trade name "CA-S150 type" manufactured by Kyowa Interface Science Co., Ltd.). The contact angle of each substrate of the aluminum plate, the artificial leather (Supplale manufactured by Idemitsu Techno Fine) and the impact polystyrene (HIPS) is as follows.

|                         |                   |        |
|-------------------------|-------------------|--------|
| Contact Angle [degree]  | Aluminum Plate    | : 91   |
|                         | Artificial Leather| : 106  |
|                         | HIPS              | : 87   |

(2) Friction property of coating film

After 30 seconds from dropwise addition of 0.2 mL of ion exchanged water to the surface of the coating film of the surface-hydrophilic substrates obtained in the above Examples and Comparative Examples and the like, the coefficient of friction $\mu$ was monitored with a friction tester (model: KES-SE, manufactured by Kato Tech Co., Ltd.) under the following test conditions.

|        |              |
|--------|--------------|
| Sensor | : piano wire |
| Load   | : 50 [g]     |
| Speed  | : 10 [mm / s]|

(i) Mean Coefficient of Friction (MIU)

The mean coefficient of friction has correlation with ease of slipping and resistance against slipping felt in rubbing the surface. The surface is more difficult to slip on as the value become greater.
Friction coefficient $\mu$ of the coating film surface of the surface-hydrophilic substrates obtained in the above Examples and Comparative Examples was monitored. Then, the friction coefficient $\mu$ is integrated for a width of 20 mm for the monitoring. The mean coefficient of friction (MIU) is obtained by dividing the integral value by the width (20 mm) for the monitoring. When the value of MIU is 0.3 or lower, it can be determined that the slipperiness is good.

(ii) Deviation in Mean Coefficient of Friction (MMD) (Roughness Resistant Property)

The deviation in the mean coefficient of friction(MMD) has correlation with smoothness and roughness felt in rubbing the surface. The surface is rougher, as this value becomes greater.
In the width of 20 mm for monitoring, an absolute value of a difference between the mean coefficient of friction (MIU) and the coefficient of friction $\mu$ is integrated. The deviation in the mean coefficient of friction (MMD) is obtained by dividing the integral value by the width for the monitoring (20 mm). When the value of MMD is 0.015 or lower, it can be determined that the smoothness of the surface is good.

(3) Moisture absorption-desorption property

After the surface-hydrophilic substrates obtained in the above Examples and Comparative Examples, having each mass [A (g)] measured in advance, were allowed to stand in a thermo-hygrostat chamber for 5 hours under the condition of 34°C and 90% RH and thereby each mass [B (g)] was measured. Further, they were allowed to stand for 2 hours under the condition of 25°C and 65% RH, and thereby each mass [C (g)] at that time was measured. The moisture absorption property (g/g) and moisture desorption property (g/g) per unit mass were determined according to the following equations.

$$\text{Moisture absorption property (g/g)} = (B-A)/A$$

$$\text{Moisture desorption property (g/g)} = (B-C)/A$$

(4) Durability

The surface-hydrophilic substrates obtained in the above Examples and Comparative Examples were immersed in ion-exchanged water at 25°C for 2 hours and were then dried in a hot air dryer at 40°C. Thereafter, the coating film surface of the surface-hydrophilic substrate was rubbed 30 times with a paper waste (S200 manufactured by Nippon Paper Crecia Co., Ltd.). After that, the contact angle, the mean coefficient of friction (MIU), the deviation in the mean coefficient of friction (MMD), the moisture absorption property and the moisture desorption property were determined. If these values are within the 10% range of the initial value, it can be judged that there is sufficient durability.

[Table 2]

| | Wettability and Slipperiness Evaluation | | | | | | Moisture Absorption-Desorption Property Evaluation | | | |
|---|---|---|---|---|---|---|---|---|---|---|
| | 1st | | | After Durability Test | | | 1st | | After Durability Test | |
| | Contact Angle (degree) | MIU | MMD | Contact Angle (degree) | MIU | MMD | Moisture Absorption Property 39°C , 90%RH, 5h | Moisture Desorption Property 25°C , 65%RH, 2h | Moisture Absorption Property 34°C, 90%RH, 5h | Moisture Desorption Property 25°C , 65%RH, 2h |
| Ex. 1 | 65 | 0.23 | 0.011 | 65 | 0.23 | 0.011 | 0.32 | 0.30 | 0.32 | 0.31 |
| Ex. 2 | 62 | 0.25 | 0.012 | 62 | 0.25 | 0.012 | 0.27 | 0.26 | 0.27 | 0.26 |
| Ex. 3 | 82 | 0.28 | 0.011 | 82 | 0.26 | 0.011 | 0.25 | 0.29 | 0.25 | 0.24 |
| Com. Ex. 1 | 62 | 0.22 | 0.011 | 62 | 0.35 | 0.015 | 0.33 | 0.31 | 0.12 | 0.19 |
| Com. Ex. 2 | 60 | 0.23 | 0.012 | 60 | 0.43 | 0.022 | 0.29 | 0.28 | 0.03 | 0.04 |
| Com. Ex. 3 | 107 | 0.62 | 0.018 | 107 | 0.62 | 0.018 | 0 | 0 | 0 | 0 |

As is apparent from the results shown in Table 2, the surface-hydrophilic substrates obtained from the resin composition comprising the polyalkylene oxide modified product and the polyolefin-based resin which are dissolved and dispersed in the hydrophilic solvent have excellent wettability, slipperiness, and moisture absorption-desorption property, and these effects are sustained long, since the substrates had excellent durability.

On the other hand, in the surface-hydrophilic substrate comprising only the polyalkylene oxide modified product (Comparative Examples 1 and 2), the 1st hydrophilicity evaluation and the moisture absorption-desorption property evaluation had good results, but after the durability test, the slipperiness and the moisture absorption-desorption property deteriorated, the effects were not sustained and the durability was low. In addition, in the surface-hydrophilic substrate consisting of only the polyolefin-based resin (Comparative Example 3), the 1st wettability, the slipperiness evaluation, and the moisture absorption-desorption property evaluation were also insufficient, and the object of the present invention could not be achieved.

INDUSTRIAL APPLICABILITY

The hydrophilic coating film and the surface-hydrophilic substrate formed by using the resin composition according to the present invention can be widely used for cosmetic sheets, miscellaneous goods and the like making use of wettability, slipperiness, and moisture absorption-desorption property.

**Claims**

1. A resin composition for forming a hydrophilic coating film, wherein the resin composition comprises a polyalkylene oxide modified product and a polyolefin-based resin which are dissolved or dispersed in a hydrophilic organic solvent.

2. The resin composition for forming a hydrophilic coating film according to claim 1, wherein the resin composition comprises 3 to 30 parts by mass of the polyolefin-based resin relative to 100 parts by mass of the polyalkylene oxide modified product.

3. The resin composition for forming a hydrophilic coating film according to claim 1 or 2, wherein the composition comprises, in a total concentration of the resins, 0.3 to 30% by mass of the polyalkylene oxide modified product and the polyolefin-based resin.

4. The resin composition for forming a hydrophilic coating film according to any one of claims 1 to 3, wherein the hydrophilic organic solvent comprises 5 to 60% by mass of water.

5. The resin composition for forming a hydrophilic coating film according to any one of claims 1 to 4, wherein the polyalkylene oxide modified product is obtained by reacting a polyalkylene oxide compound, a diol compound and a diisocyanate compound.

6. The resin composition for forming a hydrophilic coating film according to any one of claims 1 to 5, wherein the polyolefin-based resin is a copolymer obtained by reacting an ethylene compound and an $\alpha,\beta$-unsaturated carboxylic acid.

7. A hydrophilic coating film obtained by drying the resin composition for forming a hydrophilic coating film according to any one of claims 1 to 6.

8. A surface-hydrophilic substrate obtained by drying the resin composition for forming a hydrophilic coating film according to any one of claims 1 to 6 on a substrate.

9. A method for producing a surface-hydrophilic substrate by drying the resin composition for forming a hydrophilic coating film according to any one of claims 1 to 6 on a substrate.

## INTERNATIONAL SEARCH REPORT

| International application No. |
| --- |
| PCT/JP2015/075813 |

**A. CLASSIFICATION OF SUBJECT MATTER**
*C09D171/02*(2006.01)i, *C09D123/00*(2006.01)i, *C09D123/08*(2006.01)i,
*C09D175/08*(2006.01)i

According to International Patent Classification (IPC) or to both national classification and IPC

**B. FIELDS SEARCHED**

Minimum documentation searched (classification system followed by classification symbols)
C09D1/00-201/10, C08L1/00-101/14

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 6-316623 A  (Sumitomo Seika Chemicals Co.,<br>Ltd.),<br>15 November 1994 (15.11.1994),<br>claims; paragraphs [0001], [0008] to [0009],<br>[0011], [0013], [0020], [0023] to [0024],<br>[0027] to [0028], [0031] to [0032]; examples<br>& WO 1994/020561 A1 | 1-3,5-9<br>4 |
| A | JP 1-182362 A  (Kazuo SAOTOME),<br>20 July 1989 (20.07.1989),<br>claims; examples<br>(Family: none) | 1-9 |
| A | JP 51-052989 A  (Meisei Chemical Works, Ltd.),<br>11 May 1976 (11.05.1976),<br>claims; examples<br>(Family: none) | 1-9 |

☒   Further documents are listed in the continuation of Box C.          ☐   See patent family annex.

| | |
| --- | --- |
| *    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    24 November 2015 (24.11.15) | Date of mailing of the international search report<br>    08 December 2015 (08.12.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/075813

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-272765 A  (Kobe Steel, Ltd.),<br>12 October 2006 (12.10.2006),<br>claims; examples<br>(Family: none) | 1-9 |
| A | JP 2011-523962 A  (Bayer MaterialScience AG.),<br>25 August 2011 (25.08.2011),<br>claims; examples<br>& US 2011/0077310 A1<br>claims; examples<br>& WO 2009/143978 A1      & EP 2285858 A1<br>& CN 102046685 A | 1-9 |
| A | JP 64-030750 A  (Sumitomo Chemical Co., Ltd.),<br>01 February 1989 (01.02.1989),<br>claims; examples<br>(Family: none) | 1-9 |
| A | JP 9-175002 A  (Sumitomo Seika Chemicals Co., Ltd.),<br>08 July 1997 (08.07.1997),<br>claims; examples<br>(Family: none) | 1-9 |
| A | JP 2004-276241 A  (Sumitomo Seika Chemicals Co., Ltd.),<br>07 October 2004 (07.10.2004),<br>claims; examples<br>(Family: none) | 1-9 |
| A | JP 1-163229 A  (Sumitomo Chemical Co., Ltd.),<br>27 June 1989 (27.06.1989),<br>claims; examples<br>(Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1163229 A
- JP H6316623 A
- JP S5727176 A
- JP S61216774 A
- JP H6158032 A
- WO 2013137290 A